# EUROPEAN PATENT APPLICATION

(11) **EP 4 518 244 A1**
(43) Date of publication of application: **05.03.2025**
(21) Application number: 23465532.2
(22) Date of filing: 31.08.2023
(51) Int. Cl.: H04L 9/32, G06Q 30/0601, G06F 21/57, G06Q 50/10

(54) **METHOD OF SECURE DATA PROCESSING AND SHARING IN A DATA MARKETPLACE**

(71) Applicant: Siemens Aktiengesellschaft, 80333 München (DE)
(72) Inventor: TINTOIU, Anca Mihaela, 117630 Rucar, Arges (RO); KOVACS, Yvonne, 505600 Sacele, Brasov (RO); COCORADA, Sorin Alexandru, 500218 Brasov (RO); TATUC, Cosmina Stefania, 507075 Ghimbav, Brasov (RO); FURTUNA, Iosif Constantin, 500277 Brasov (RO)
(74) Representative: Fierascu, Cosmina-Catrinel

(57) **Abstract**

The invention relates to methods of data processing and sharing between data providers (sellers) and data consumers (buyers), in a secure and controlled way, comprising the following steps: receiving a first encryption key, receiving data, receiving a signed processing model,generating processing results by executing the processing model on the data, verifying the processing model signature with the first encryption key; and outputting the processing results based on the result of the verification of the processing model signature.

## Description

The invention relates to methods of data processing and sharing between data providers (sellers) and data consumers (buyers), in a secure and controlled way.

Data marketplaces are online platforms that enable individuals and organizations to buy and sell data, providing various benefits, such as facilitating recurrent data monetization and promoting data sharing.

Data marketplaces must establish trust and transparency within the buyers and sellers to ensure the credibility and legitimacy of the data being sold.

One of the main challenges is that sellers need to trust that the buyers will use the data ethically and compliant with bilateral agreement. The providers want to minimize the possibility that the consumer shares the data with other entities either by intention or by mistake.

The aim of present invention is to provide a method of data processing and sharing in a data marketplace which ensures that the consumer will use the data in compliance with agreement between producer and consumer.

According to a first aspect of the present invention there is provided a method of secure data processing, comprising the following steps:
receiving a first encryption key,
receiving data,
receiving a signed processing model,
generating processing results by executing the processing model on the data, verifying the processing model signature with the first encryption key,
outputting the processing results based on the result of the verification of the processing model signature.

In a preferred embodiment, the results are outputted if the result of the verification of the processing model signature is positive.

In another preferred embodiment, freely combinable with the previous ones, the data in the receiving data step are encrypted, and the method further comprises the step of receiving a second encryption key and decrypting the data with the second encryption key, and the processing model is executed on the decrypted data.

In yet another preferred embodiment, the second encryption key is a symmetric key or a private key of an asymmetric key pair.

In yet another preferred embodiment, freely combinable with the previous ones, the first encryption key is a symmetric key or a public key of an asymmetric key pair. Further features of the present invention will be apparent from the following description of exemplary embodiments with reference to the attached drawings.

In a further aspect, the invention relates to a system for secure data processing, comprising:
means for receiving a first encryption key,
means for receiving data,
means for receiving a signed processing model,
means for generating processing results by executing the processing model on the data,
means for verifying the processing model signature with the first encryption key,
means for outputting the processing results based on the result of the verification of the processing model signature.

Preferably, the system further comprises means for receiving a second encryption key and means for decrypting the data with the second encryption key,

Fig. 1 is a flowchart illustrating the method of secure data processing.

Fig. 2 is a block diagram illustrating the logical components of a system according to one embodiment of the invention

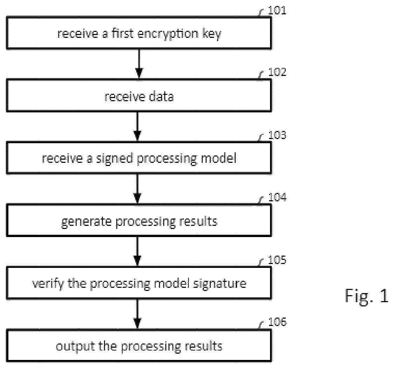

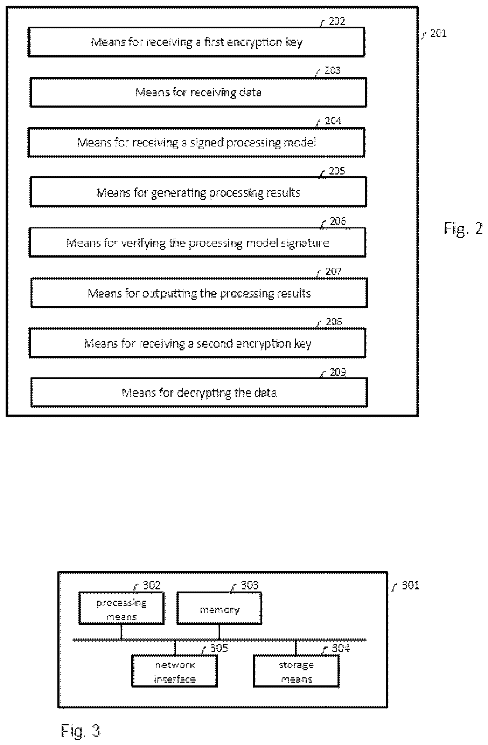

Fig. 3 is a block diagram illustrating the hardware components of a computer being part of the system according to one embodiment of the invention As presented in Fig. 1, a method of secure data processing starts with step 101, where a first encryption key is received, typically from data producer. The first encryption key is used for digital signature verification. A symmetric or an asymmetric cryptography can be used for digital signature. In case when asymmetric cryptography is used, only a public key is received in step 101, and a private key is only used by an entity which provides a digital signature.

Optionally, in step 101, a second encryption key may be received, typically from data producer. The second encryption key is used for decryption of encrypted data. A symmetric or an asymmetric cryptography can be used for data encryption. In case when asymmetric cryptography is used, only a private key is received in step 101, and a public key is only used by an entity which encrypts data.

In step 102, data is received, typically from data producer. Optionally, the data can be encrypted. In case when the data is encrypted, the second encryption key is received, and the data is decrypted using the second encryption key.

Then, in step 103, a signed data processing model is received, typically from data consumer.

The data processing model defines how the data is going to be processed. Data processing model may be an algorithm, formula, statistics, computations, query, transformation, AI (artificial intelligence) model training or anything else related to data processing. One example of data processing model is computation of the average for a time series of the data. Another example of data processing model is training an AI model for anomaly detection, based on the data and its subset.

Data processing model is digitally signed by data producer. Typically, data consumer has to send the data processing model to data producer and obtain a digital signature, and then such signed data processing model is sent to a computer performing the method according to the present invention. The data consumer may choose a model from an existing data processing model library or may submit its own model. The data producer may automatically sign the data processing model based on predefined rules. In some cases, a manual analysis may be performed by data producer before signing the model.

Next, in step 104, the data are processed by executing the processing model on the data.

Subsequently, in step 105, the signature of data processing model is verified, using the first encryption key.

Finally, in step 106, the results of data processing performed in step 104, are outputted. Typically, outputting includes sending the results to data consumer.

Step 106 may be performed conditionally, depending on the verification of signature performed in step 105. For example, if the signature is verified positively, the results are outputted, otherwise no results and/or an error or warning message is outputted Alternatively, step 105 may be performed before step 104, and in such case step 104 may also be performed conditionally, depending on the verification of signature performed in step 105. Such approach may reduce the computational load in case when data processing is computationally intensive.

Fig. 2 illustrates the logical components of a system for secure data processing, according to one embodiment of the invention. Such system is usually called a controlled environment. The system 201 includes means 202 for receiving a first encryption key, means 203 for receiving data, means 204 for receiving a signed processing model, means 205 for generating processing results by executing the processing model on the data, means 206 for verifying the processing model signature with the first encryption key, and means 207 for outputting the processing results based on the result of the verification of the processing model signature. Optionally the system 201 may also include means 208 for receiving a second encryption key and means 209 for decrypting the data with the second encryption key.

Means 202-209 may be computer programs running on a computer. Some of the means 202-209 may run on one or more other computers connected via one or more network interfaces.

In a typical use case, means 202 is used for receiving a first encryption key. The encryption key may be received from a network interface, read from a file stored in a computer storage or entered by a user.

Means 203 is used for receiving data. The data may be received from a network interface, read from a file stored in a computer storage or entered by a user. The data may additionally be encrypted. In such a case, means 208 is used for receiving a second encryption key, and means 209 is used for decrypting the data with the second encryption key. The decrypted data is used in further stages.

Means 204 is used for receiving signed processing model. The signed processing model may be received from a network interface, read from a file stored in a computer storage or entered by a user.

Means 205 is used for generating processing results by executing the processing model on the data. Depending on the definition of the processing model, it may include an algorithm, formula, statistics, computations, query, transformation, AI (artificial intelligence) model training or anything else related to data processing.

Means 206 is used for verifying the processing model signature with the first encryption key.

Means 207 is used for outputting the processing results based on the result of the verification of the processing model signature. The results are typically outputted to the network interface but may also be outputted to a file and stored in the storage means.

Fig. 3 illustrates the hardware components of a computer being part of the system according to one embodiment of the invention. A computer 301, in the most general form includes a processing means 302, which typically is CPU and/or GPU, a memory 303, which is typically RAM, a storage means 304, which is typically hard disk, and a network interface 305. Computer 301 may be a standalone PC, workstation, server, or a virtual server in a cloud environment.

With the method and system according to the invention, the data producer maintains full control by not allowing the data to leave the controlled environment, enforcing contractual obligations, as well as by validating the processing model used on the data.

Although particular embodiments have been disclosed herein in detail, they are done by way of example for purposes of illustration only, and is not intended to be limiting with respect to the scope of the appended claims that follow.

Independent of the grammatical term usage, individuals with male, female or other gender identities are included within the term.

## Claims

1. A method of secure data processing, comprising the following steps:
receiving a first encryption key,
receiving data,
receiving a signed processing model,
generating processing results by executing the processing model on the data,
verifying the processing model signature with the first encryption key; and
outputting the processing results based on the result of the verification of the processing model signature.

2. The method according to claim 1, wherein the results are outputted if the result of the verification of the processing model signature is positive.

3. The method according to claim 1 or 2, wherein the data in the receiving data step are encrypted, further comprising the step of receiving a second encryption key and decrypting the data with the second encryption key, and wherein the processing model is executed on the decrypted data.

4. The method according to claim 3, wherein the second encryption key is a symmetric key or a private key of an asymmetric key pair.

5. The method according to any of the preceding claims, wherein the first encryption key is a symmetric key or a public key of an asymmetric key pair.

6. A system for secure data processing, comprising:
means for receiving a first encryption key,
means for receiving data,
means for receiving a signed processing model,
means for generating processing results by executing the processing model on the data,
means for verifying the processing model signature with the first encryption key,
means for outputting the processing results based on the result of the verification of the processing model signature.

7. The system according to claim 6, further comprising means for receiving a second encryption key and means for decrypting the data with the second encryption key.
